# EUROPEAN PATENT SPECIFICATION

(11) **EP 3 633 781 B1**
(45) Date of publication and mention of the grant of the patent: **24.04.2024**
(21) Application number: 18838664.3
(22) Date of filing: 19.06.2018
(51) Int. Cl.: H01M 10/06, H01M 4/14, H01M 4/62, H01M 10/12, H01M 50/466

(54) **LEAD-ACID BATTERY**
BLEI-SÄURE-AKKUMULATOR
BATTERIE AU PLOMB-ACIDE

(30) Priority: 24.07.2017 JP 2017142684
(43) Date of publication of application: 08.04.2020
(73) Proprietor: GS Yuasa International Ltd., Kyoto-shi, Kyoto 601-8520 (JP)
(72) Inventor: TACHIKAWA, Shuhei, Kyoto-shi Kyoto 601-8520 (JP); SASAKI, Eriko, Kyoto-shi Kyoto 601-8520 (JP)
(74) Representative: Isarpatent
(86) International application number: PCT/JP2018/023257
(87) International publication number: WO 2019/021692

(56) References cited:
- EP-A1- 3 059 789
- EP-A1- 3 059 796
- WO-A1-2011/090113
- WO-A1-2011/108056
- WO-A1-2019/188056
- JP-A- H05 135 757
- JP-A- 2012 089 310
- JP-A- 2013 041 848
- JP-A- 2016 154 131

## Description

### TECHNICAL FIELD

The present invention relates to a lead-acid battery.

### BACKGROUND ART

Lead-acid batteries are used in various applications in addition to vehicle and industrial applications. Lead-acid batteries include a negative electrode plate, a positive electrode plate, and an electrolyte solution. A separator is disposed between the negative electrode plate and the positive electrode plate. For example, in the lead-acid battery proposed in Patent Document 1, the negative electrode plate is wrapped with a polyethylene bag-like separator. A resin having a sulfone group and the like, barium sulfate, a carbonaceous conductive material, and the like are added to the negative electrode material as additives.

Lead-acid batteries are used in a poor charged state called partial state of charge (PSOC) in some cases. For example, lead-acid batteries are used in PSOC at the time of idling stop/start (ISS).

EP 3 059 789 A1 discloses a lead-acid battery including a negative electrode material containing graphite or carbon fiber. Further, EP 3 059 796 A1 describes a lead-acid battery including a negative electrode material containing graphite or carbon fiber, and barium sulfate or elemental barium.

### PRIOR ART DOCUMENT

### PATENT DOCUMENT

Patent Document 1: JP-A-2017-54629

### SUMMARY OF THE INVENTION

### PROBLEMS TO BE SOLVED BY THE INVENTION

Among tests to evaluate the life performance of lead-acid batteries under a PSOC condition, the life is regulated by a negative electrode plate having a surface area relatively smaller than that of the positive electrode plate in the test in which high rate discharge is repeated (high rate PSOC cycle test). In addition, the electrolyte solution is likely to be stratified under a PSOC condition, and a large amount of lead sulfate is accumulated at the lower portion of the negative electrode plate and the reactable area of the negative electrode plate further decreases when the vicinity of the negative electrode plate is stratified. Hence, it is considered to be important to suppress stratification in the vicinity of the negative electrode plate in order to improve the life performance of a lead-acid battery used in PSOC.

In the case of using a bag-like separator, stratification in the vicinity of the negative electrode plate is likely to proceed, lead sulfate is accumulated at the lower portion of the negative electrode plate, and the life is shortened when the positive electrode plate is wrapped with a bag-like separator. Hence, as in Patent Document 1, a negative electrode plate is generally wrapped with a bag-like separator.

However, in a case where the negative electrode plate is wrapped with a bag-like separator, it has been newly found that the life is rather shortened in a cycle test (deep discharge cycle test) in which deep discharge is repeated. In other words, it has been difficult to obtain a lead-acid battery exhibiting excellent life performance in both the high rate PSOC cycle test and the deep discharge cycle test.

### MEANS FOR SOLVING THE PROBLEMS

The present invention is a lead-acid battery which includes a negative electrode plate, a positive electrode plate, a bag-like separator, and an electrolyte solution, in which the negative electrode plate contains a negative electrode material containing a first carbon material and a second carbon material, the first carbon material has a particle size of 32 µm or more, the second carbon material has a particle size of less than 32 µm, a ratio: R2/R1 of a powder resistance R2 of the second carbon material to a powder resistance R1 of the first carbon material is 15 or more and 420 or less, wherein the powder resistances R1 and R2 are measured by the four probe method in conformity with JIS K 7194:1994 at a pressure of 3.18 MPa, and the positive electrode plate is wrapped with the bag-like separator, wherein a content of the first carbon material in the negative electrode material in a fully charged state is 0.05% by mass or more and 3.0% by mass or less, and wherein a content of the second carbon material in the negative electrode material in a fully charged state is 0.03% by mass or more and 1.0% by mass or less, wherein the first carbon material contains at least graphite and the second carbon material contains at least carbon black.

### ADVANTAGES OF THE INVENTION

There is provided a lead-acid battery exhibiting excellent life performance in both a high rate PSOC cycle test and a deep discharge cycle test.

### BRIEF DESCRIPTION OF THE DRAWINGS

Fig. 1 is an exploded perspective diagram with a part cut away, which illustrates an external appearance and an internal structure of a lead-acid battery according to an embodiment of the present invention.
Fig. 2 is a diagram which illustrates results of a deep discharge cycle test for a lead-acid battery A3 according to Example and a lead-acid battery B3 according to Comparative Example.
Fig. 3 is a diagram which illustrates the relation between a R2/R1 ratio and life in a high rate PSOC cycle test.

### MODE FOR CARRYING OUT THE INVENTION

The present invention is a lead-acid battery including a negative electrode plate, a positive electrode plate, a bag-like separator, and an electrolyte solution. The negative electrode plate contains a negative electrode material containing a first carbon material and a second carbon material. The first carbon material has a particle size of 32 µm or more. The second carbon material has a particle size of less than 32 µm. The ratio (R2/R1 ratio) of the powder resistance R2 of the second carbon material to the powder resistance R1 of the first carbon material is 15 or more and 420 or less, wherein the powder resistances R1 and R2 are measured by the four probe method in conformity with JIS K 7194:1994 at a pressure of 3.18 MPa. The positive electrode plate is wrapped with the bag-like separator. A content of the first carbon material in the negative electrode material in a fully charged state is 0.05% by mass or more and 3.0% by mass or less. A content of the second carbon material in the negative electrode material in a fully charged state is 0.03% by mass or more and 1.0% by mass or less. The first carbon material contains at least graphite and the second carbon material contains at least carbon black

As the positive electrode plate is wrapped with a bag-like separator, the life performance in the deep discharge cycle test (hereinafter also referred to as a deep discharge cycle life) is remarkably improved. The reason for this is not clear, but high-concentration sulfuric acid generated in the vicinity of the positive electrode plate at the time of charge hardly moves out of the bag-like separator when the positive electrode plate is wrapped with a bag-like separator. In addition, the electrolyte solution in the vicinity of the positive electrode plate is likely to be stirred in the vertical direction by the gas generated in the positive electrode plate. It is considered that the synergistic action of these phenomena remarkably suppresses stratification in the vicinity of the positive electrode plate and improves the deep discharge cycle life.

On the other hand, the diffusion region of the electrolyte solution is widened in the vicinity of the negative electrode plate, and thus high-concentration sulfuric acid is likely to settle and stratification tends to proceed. As the stratification proceeds, the charge reaction hardly proceeds at the lower portion of the negative electrode plate and lead sulfate is likely to be accumulated.

However, in a case where the first carbon material and the second carbon material which satisfy the R2/R1 ratio of 15 to 420 are contained in the negative electrode material, the conductivity of the negative electrode plate is remarkably improved. When the R2/R1 ratio is controlled to be in the above range, it is considered that a favorable conductive network is formed in the negative electrode material and the formed conductive network is hardly deteriorated. By the construction of such a favorable conductive network, charge acceptability is improved even in a case where a considerable amount of non-conductor lead sulfate is present in the negative electrode material. Hence, even in a case where accumulation of lead sulfate is likely to proceed at the lower portion of the negative electrode plate, the life performance in the high rate PSOC cycle test (hereinafter also referred to as a high rate PSOC cycle life) is favorably maintained as compared with a case where the negative electrode material does not contain the first carbon material and the second carbon material which satisfy the R2/R1 ratio of 15 to 420.

Next, it is preferable that the ratio (s2/s1 ratio) of the specific surface area s2 of the second carbon material to the specific surface area s1 of the first carbon material is 10 or more and 500 or less. In this case, it is considered that the charge acceptability is more uniform over the entire region of the negative electrode plate. As the variation in charge acceptability of the negative electrode plate is reduced, proceeding of side reactions is suppressed as well as the reductive reaction of lead sulfate is likely to proceed. Hence, the high rate PSOC cycle life is more favorable.

Furthermore, the charge-discharge reaction of the positive electrode plate facing the negative electrode plate is more uniform as the s2/s1 ratio is controlled to be in the above range. As a result, softening and falling off of the positive electrode material at the upper portion of the positive electrode plate at which charge-discharge is likely to be concentrated are suppressed. As the amount of positive electrode material falling off is reduced, the amount of positive electrode material floating on the electrolyte solution decreases, and short circuit (moss short circuit) caused by the positive electrode material, which is deposited on the negative electrode plate, grows, and comes into contact with the positive electrode plate, is also suppressed.

Hereinafter, the lead-acid battery according to an embodiment of the present invention will be described for every main constituent requirement, but the present invention is not limited to the following embodiments.

### (Negative electrode plate)

The negative electrode plate is usually formed of a negative electrode current collector (negative electrode grid or the like) and a negative electrode material. The negative electrode material is a part of the negative electrode plate excluding the negative electrode current collector.

Members such as a mat and pasting paper are pasted to the negative electrode plate in some cases. In a case where the negative electrode plate includes such members (pasting members), the negative electrode material is a part of the negative electrode plate excluding the negative electrode current collector and the pasting members. However, the thickness of the electrode plate includes the thickness of the mat. In a case where the mat is pasted to the separator, the thickness of the mat is included in the thickness of the separator.

The negative electrode material contains a negative active material (lead or lead sulfate) which develops capacity by redox reaction. The negative active material in a charged state is spongy lead, but the unformed negative electrode plate is usually fabricated using lead powder.

The negative electrode plate contains a first carbon material and a second carbon material. The first carbon material has a particle size of 32 µm or more, and the second carbon material has a particle size of less than 32 µm. The first carbon material and the second carbon material are separated and distinguished from each other by a procedure to be described later.

The negative electrode material may further contain an organic expander, barium sulfate, and the like, or may further contain other additives if necessary.

### (Carbon material)

As the first carbon material and the second carbon material, carbon black, graphite, hard carbon, soft carbon, and the like can be used. The first carbon material contains at least graphite and the second carbon material contains at least carbon black. Examples of carbon black include acetylene black, ketjen black, furnace black, and lamp black. Graphite may be any carbon material including a graphite type crystal structure and may be either artificial graphite or natural graphite.

For example, the kind, average particle size D₅₀, specific surface area, and the like of each carbon material of the first carbon material and second carbon material are only required to be adjusted so that the ratio (R2/R1 ratio) of the powder resistance R2 of the second carbon material to the powder resistance R1 of the first carbon material is 15 to 420.

The first carbon material contains at least graphite. The second carbon material contains at least carbon black. By selecting a combination of the above materials as the first carbon material and the second carbon material, the R2/R1 ratio is likely to be adjusted, a more favorable conductive network is likely to be formed in the negative electrode material, and the deterioration of the conductive network is less likely to occur.

Among the first carbon materials, those having an intensity ratio I_{D}/I_{G} of the peak (D band) appearing in a range of 1300 cm⁻¹ or more and 1350 cm⁻¹ or less to the peak (G band) appearing in a range of 1550 cm⁻¹ or more and 1600 cm⁻¹ or less in the Raman spectrum of 0 or more and 0.9 or less are referred to as graphite.

The R2/R1 ratio is only required to be 15 or more, but is preferably 20 or more and more preferably 25 or more, and may be 50 or more. In addition, the R2/R1 ratio is only required to be 420 or less but is preferably 155 or less, more preferably 130 or less, and particularly preferably 70 or less. These lower limit values and upper limit values may be arbitrarily combined. A preferred range of the R2/R1 ratio may be 25 to 420, 25 to 155, 25 to 70, 50 to 420, 50 to 155, 50 to 130, 50 to 70, and the like. In a case where the R2/R1 ratio is in such a range, excellent high rate PSOC cycle life is likely to be secured.

The s2/s1 ratio is, for example, preferably 10 or more and more preferably 20 or more and may be 30 or more or 40 or more. In addition, the s2/s1 is preferably 500 or less, more preferably 240 or less, and still more preferably 120 or less. These lower limit values and upper limit values may be arbitrarily combined. The s2/s1 ratio may be 20 to 500, 20 to 400, 20 to 240, 20 to 120, 30 to 500, 30 to 400, 30 to 240, 30 to 120, 10 to 240, 10 to 120, 20 to 120, and the like. In a case where the s2/s1 ratio is in such a range, superior high rate PSOC cycle life is likely to be secured.

The content of the first carbon material in the negative electrode material in a fully charged state is 0.05% by mass or more and 3.0% by mass or less and preferably 0.1% by mass or more. In addition, the content is preferably 2.0% by mass or less and still more preferably 1.5% by mass or less. These upper limits and lower limits can be arbitrarily combined. In a case where the content of the first carbon material is 0.05% by mass or more, the high rate PSOC cycle life is likely to be improved. In a case where the content of the first carbon material is 3.0% by mass or less, the adhesive property between the active material particles is likely to be secured, thus the generation of cracks in the negative electrode plate is suppressed, and the high rate PSOC cycle life is likely to be further improved.

The content of the second carbon material in the negative electrode material in a fully charged state is 0.03% by mass or more and 1.0% by mass or less and preferably 0.05% by mass or more. In addition, the content is preferably 0.5% by mass or less and still more preferably 0.3% by mass or less. These upper limits and lower limits can be arbitrarily combined. In a case where the content of the second carbon material is 0.03% by mass or more, the high rate PSOC cycle life is likely to be improved. In a case where the content of the second carbon material is 1.0% by mass or less, for example, the high rate performance is likely to be enhanced.

A method for determining or analyzing the physical properties of the carbon material will be described below.

### (A) Separation of carbon material

A lead-acid battery which has been previously formed and is in a fully charged state is disassembled, and the negative electrode plate is taken out, washed with water to remove sulfuric acid therefrom, and dried in a vacuum (dried at a pressure lower than atmospheric pressure). The negative electrode material is collected from the dried negative electrode plate and pulverized. To 5 g of the pulverized sample, 30 mL of a nitric acid aqueous solution at a concentration of 60% by mass is added, and the mixture is heated at 70°C. Furthermore, 10 g of disodium ethylenediaminetetraacetate, 30 mL of ammonia water at a concentration of 28% by mass, and 100 mL of water are added to the mixture, and this mixture is continuously heated to dissolve soluble components. The sample thus pretreated is recovered by filtration. The recovered sample is allowed to pass through a sieve having an opening of 500 µm, components having a large size such as a reinforcing material are removed, and the components which have passed through the sieve are recovered as carbon materials.

When the recovered carbon materials are sieved by a wet process using a sieve having an opening of 32 µm, those that do not pass through the sieve eyes but remain on the sieve are taken as the first carbon material and those that pass through the sieve eyes are taken as the second carbon material. In other words, the particle size of each carbon material is based on the size of the sieve opening. For sieving by a wet process, reference can be made to JIS Z 8815: 1994.

Specifically, the carbon material is placed on a sieve having an opening of 32 µm and sieved by gently shaking the sieve for 5 minutes while sprinkling ion-exchange water. The first carbon material remained on the sieve is recovered from the sieve by pouring ion-exchange water and separated from the ion-exchange water by filtration. The second carbon material that has passed through the sieve is recovered by filtration using a nitrocellulose membrane filter (opening: 0.1 µm). The recovered first carbon material and second carbon material are each dried at a temperature of 100°C for 2 hours. As a sieve having an opening of 32 µm, one equipped with a sieve mesh having a nominal opening of 32 µm and is prescribed in JIS Z 8801-1: 2006 is used.

The content of each carbon material in the negative electrode material is determined by measuring the mass of each carbon material separated by the above procedure and calculating the ratio (% by mass) of this mass in 5 g of the pulverized sample.

### (B) Powder resistance of carbon material

The powder resistance R1 of the first carbon material and the powder resistance R2 of the second carbon material are values measured by the four probe method using a low resistance resistivity meter (for example, Loresta-GX MCP-T700 manufactured by Mitsubishi Chemical Analytech Co., Ltd.) in conformity with JIS K 7194: 1994 at a pressure of 3.18 MPa by introducing 0.5 g of a sample for each of the first carbon material and the second carbon material separated by the procedure of (A) described above into a powder resistance measurement system (for example, MCP-PD51 manufactured by Mitsubishi Chemical Analytech Co., Ltd.).

### (C) Specific surface area of carbon material

The specific surface area s1 of the first carbon material and the specific surface area s2 of the second carbon material are the BET specific surface areas of the first carbon material and the second carbon material, respectively. The BET specific surface area is determined using the BET equation by the gas adsorption method using each of the first carbon material and the second carbon material which are separated by the procedure of (A) described above. Each carbon material is pretreated by being heated in a nitrogen flow at a temperature of 150°C for 1 hour. The BET specific surface area of each carbon material is only required to be determined using the pretreated carbon materials and, for example, the following apparatus under the following conditions.

Measurement apparatus: TriStar3000 manufactured by Micromeritics Instrument Corporation
Adsorption gas: Nitrogen gas with purity of 99.99% or more
Adsorption temperature: Liquid nitrogen boiling point temperature (77K)
Calculation method for BET specific surface area: Conformed to JIS Z 8830: 2013 7.2

In the present specification, the fully charged state of the lead-acid battery is a state in which constant current charge has been performed in a water bath at 25°C until to reach 2.5 V/cell at a 5 hour rate current and then constant current charge has been further performed at a 5 hour rate current for 2 hours in the case of a liquid type battery. In addition, a fully charged state is a state in which constant current constant voltage charge of 2.23 V/cell has been performed at a 5 hour rate current in an air tank at 25°C and the charge has been terminated at a time point at which the charge current at the time of constant voltage charge has reached 1 mCA or less in the case of a valve regulated battery.

In the present specification, 1 CA is a current value (A) having the same numerical value as the nominal capacity (Ah) of battery. For example, if the battery has a nominal capacity of 30 Ah, 1 CA is 30 A and 1 mCA is 30 mA.

### (Organic expander)

An organic expander can be contained in the negative electrode material. The organic expander is an organic polymer containing a sulfur element and generally contains a sulfur element as a sulfur-containing group as well as one or more, preferably a plurality of aromatic rings in the molecule. Among the sulfur-containing groups, a sulfonic acid group or a sulfonyl group which is in a stable form is preferable. The sulfonic acid group may be present in an acid form or in a salt form such as a Na salt.

As the organic expander, for example, lignins may be used or a condensation product of an aromatic compound having a sulfur-containing group with formaldehyde may be used. Examples of lignins include lignin and lignin derivatives. The lignin derivatives are lignin sulfonic acid, salts (for example, alkali metal salts such as sodium salts) of lignin sulfonic acid, and the like. The organic expanders may be used singly or in combination of two or more thereof. For example, lignins and a condensation product of an aromatic compound having a sulfur-containing group with formaldehyde may be used concurrently.

As the aromatic compound, it is preferable to use bisphenols, biphenyls, naphthalenes and the like. Bisphenols, biphenyls, and naphthalenes are generic terms for compounds having a bisphenol skeleton, a biphenyl skeleton, and a naphthalene skeleton, respectively. Each of these may have a substituent. One or a plurality of these may be contained in the organic expander. As the bisphenol, bisphenol A, bisphenol S, bisphenol F and the like are preferable. The sulfur-containing group may be directly bonded to the aromatic ring of the aromatic compound or may be bonded to the aromatic ring, for example, as an alkyl chain having a sulfur-containing group. A condensation product of N,N'-(sulfonyldi-4,1-phenylene) bis(1,2,3,4-tetrahydro-6-methyl-2,4-dioxopyrimidine-5-sulfonamide) may be used as an organic expander.

The content of sulfur element in the organic expander is, for example, 400 µmol/g or more and 10000 µmol/g or less. The content of sulfur element in the lignins is, for example, 400 µmol/g or more and 1000 µmol/g or less. The content of sulfur element in the condensation product of an aromatic compound having a sulfur-containing group with formaldehyde is, for example, 2000 µmol/g or more and 10000 µmol/g or less and preferably 3000 µmol/g or more and 9000 µmol/g or less.

The content of the organic expander contained in the negative electrode material is, for example, 0.01% by mass or more and 1.0% by mass or less, preferably 0.02% by mass or more, and preferably 0.8% by mass or less. These upper limits and lower limits can be arbitrarily combined.

Hereinafter, a method for quantifying the organic expander contained in the negative electrode material will be described. Prior to quantitative analysis, the formed lead-acid battery is fully charged and then disassembled to obtain the negative electrode plate to be analyzed. The obtained negative electrode plate is washed with water and dried to remove the electrolyte solution in the negative electrode plate. Next, the negative electrode material is separated from the negative electrode plate, and an unpulverized initial sample is obtained.

### [Organic expander]

The unpulverized initial sample is pulverized, and the pulverized initial sample is immersed in a NaOH aqueous solution at 1 mol/L to extract the organic expander. Insoluble components are removed from the NaOH aqueous solution containing the extracted organic expander by filtration. The obtained filtrate (hereinafter also referred to as filtrate to be analyzed) is desalted, then concentrated, and dried to obtain a powder (hereinafter also referred to as powder to be analyzed) of organic expander. Desalting may be performed by placing the filtrate in a dialysis tube and immersing the dialysis tube in distilled water.

The organic expander is identified by acquiring information from the infrared spectrum of the powder to be analyzed, the ultraviolet-visible absorption spectrum of a solution obtained by dissolving the powder to be analyzed in distilled water, the NMR spectrum of a solution obtained by dissolving the powder to be analyzed in a solvent such as heavy water, the pyrolysis GC-MS from which the information on the individual compounds constituting a substance can be acquired, and the like.

The ultraviolet-visible absorption spectrum of the filtrate to be analyzed is measured. The content of the organic expander in the negative electrode material is quantified using the spectral intensity and a calibration curve created in advance. In a case where the structural formula of the organic expander to be analyzed cannot be strictly identified and the same calibration curve of organic expander cannot be used, a calibration curve is created using an available organic expander which has an ultraviolet-visible absorption spectrum, an infrared spectrum, a NMR spectrum and the like that are similar to those of the organic expander to be analyzed.

### (Others)

The negative electrode current collector may be formed by casting lead (Pb) or a lead alloy or by processing a lead or lead alloy sheet. Examples of the processing method include expand and punching.

The lead alloy used in the negative electrode current collector may be any of a Pb-Sb-based alloy, a Pb-Ca-based alloy, or a Pb-Ca-Sn-based alloy. These lead alloys may further contain at least one selected from the group consisting of Ba, Ag, Al, Bi, As, Se, and Cu as an additive element.

The negative electrode plate can be formed by filling a negative electrode paste in the negative electrode current collector and curing and drying the negative electrode paste to fabricate an unformed negative electrode plate and then forming the unformed negative electrode plate. The negative electrode paste is prepared by adding water and sulfuric acid to lead powder, a carbon material, an organic expander, and various additives to be used if necessary and mixing the mixture. Upon curing, it is preferable to cure the unformed negative electrode plate at a temperature higher than room temperature and a high humidity.

The formation can be performed by charging the element with electricity in a state in which the element including the unformed negative electrode plate is immersed in an electrolyte solution containing sulfuric acid in the container of lead-acid battery. However, the formation may be performed before the assembly of the lead-acid battery or the element. Spongy lead is produced by formation.

### (Positive electrode plate)

There are a paste type positive electrode plate and a clad type positive electrode plate as the positive electrode plate of a lead-acid battery.

A paste type positive electrode plate is equipped with a positive electrode current collector and a positive electrode material. The positive electrode material is retained in the positive electrode current collector. The positive electrode current collector may be formed similarly to the negative electrode current collector and can be formed by casting lead or a lead alloy or processing a lead or lead alloy sheet.

A clad type positive electrode plate is equipped with a plurality of porous tubes, a spine to be inserted into each tube, a positive electrode material filled in the tube in which the spine is inserted, and a joint for connecting a plurality of tubes.

As the lead alloy used in the positive electrode current collector, a Pb-Ca-based alloy or a Pb-Ca-Sn-based alloy are preferable from the viewpoint of corrosion resistance and mechanical strength. The positive electrode current collector may have lead alloy layers having different compositions, and a plurality of alloy layers may be provided. It is preferable to use a Pb-Sb-based alloy in the spine.

The positive electrode material contains a positive active material (lead dioxide or lead sulfate) which develops capacity by redox reaction. The positive electrode material may contain other additives if necessary.

An unformed paste type positive electrode plate is obtained by filling a positive electrode paste in the positive electrode current collector, curing and drying the positive electrode paste in conformity with the case of the negative electrode plate. Thereafter, the unformed positive electrode plate is formed. The positive electrode paste is prepared by kneading lead powder, additives, water, sulfuric acid, and the like.

The clad type positive electrode plate is formed by filling lead powder or slurry-like lead powder in the tube in which a spine is inserted and joining the plurality of tubes with a joint.

### (Bag-like separator)

A bag-like separator for packaging the positive electrode plate can be obtained by forming a porous sheet into a bag shape. The bag-like separator is formed, for example, by folding one rectangular porous sheet in two and joining the end portions of two sides of the overlapping portion. The two sides to which the end portions are joined are preferably two sides that intersect the crease but are not limited thereto. Alternatively, two sheets may be prepared and overlapped, and the end portions of the three sides of the overlapping portion may be joined. The three sides other than the opening portion for inserting the positive electrode plate may be entirely joined or may partially have a non-joined portion. As the porous sheet, a woven fabric, a nonwoven fabric, a microporous film, and the like can be used.

The woven fabric and nonwoven fabric are only required to be mainly formed of fibers, and, for example, 60% by mass or more thereof is formed of fibers. The woven fabric is only required to be mainly formed of a woven material or knitted material of fibers, and the nonwoven fabric is only required to be mainly formed of entangled fibers. As the fibers, glass fibers, polymer fibers, pulp fibers and the like can be used. Among these, a woven or nonwoven fabric containing polymer fibers and glass fibers is preferable. The woven fabric and the nonwoven fabric may be mats containing components other than fibers. Examples of components other than fibers include acid-resistant inorganic powders and polymers as binders.

The microporous film is only required to be mainly formed of a component other than a fiber component and is formed, for example, by extruding a composition containing a pore-forming additive (polymer powder, oil or the like) into a sheet shape and then removing the pore-forming agent to form pores. It is preferable that the microporous film is mainly formed of a polymer exhibiting acid resistance.

Examples of the polymer constituting the fiber, binder, microporous film, and the like include polyolefin, acrylic resin, and polyester (for example, polyethylene terephthalate). Among these, it is preferable to use polyolefins such as polyethylene and polypropylene as the polymer constituting the microporous film. In a case where the porous sheet contains a thermoplastic polymer, joining of the end portions when forming the bag-like separator can be performed by heat sealing.

The bag-like separator may be formed only of a woven fabric or a nonwoven fabric or may be formed only of a microporous film. The bag-like separator may be formed of a layered body of a woven fabric or a nonwoven fabric and a microporous film if necessary. Moreover, the bag-like separator may be formed of a product fabricated by pasting different or similar materials, a product fabricated by biting unevenness of different or similar materials having unevenness, and the like.

A bag-like separator and a separator not having a bag shape may be used concurrently. For example, the positive electrode plate may be accommodated in a bag-like separator formed of a microporous film and a mat mainly formed of a nonwoven fabric not having a bag shape may be attached to the surface of the positive electrode plate or the negative electrode plate.

### (Electrolyte solution)

The electrolyte solution is an aqueous solution containing sulfuric acid and may be gelled if necessary. The specific gravity of the electrolyte solution in a lead-acid battery which has been formed and is in a fully charged state at 20°C is, for example, 1.10 to 1.35 g/cm³ and preferably 1.20 to 1.35 g/cm³.

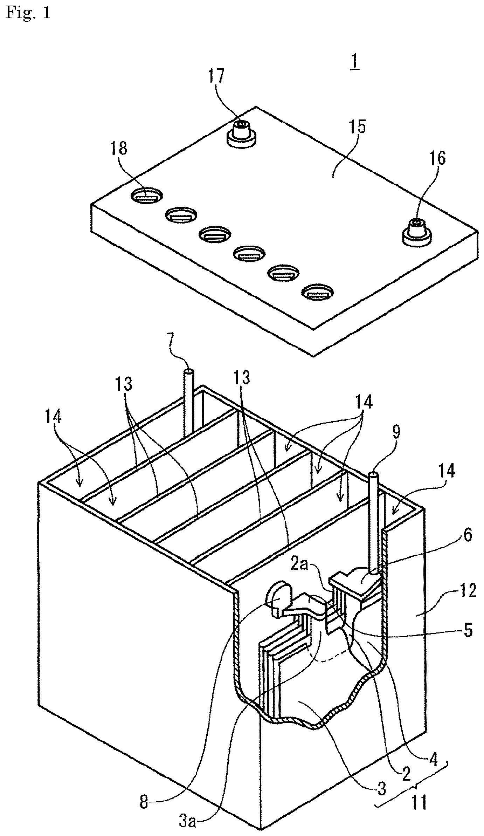

The external appearance of an example of the lead-acid battery according to an embodiment of the present invention is illustrated in Fig. 1.

A lead-acid battery 1 is equipped with a container 12 which accommodates an element 11 and an electrolyte solution (not illustrated). The container 12 is partitioned into a plurality of cell chambers 14 by a partition 13. One element 11 is accommodated in each cell chamber 14. The opening portion of the container 12 is closed with a lid 15 equipped with a positive terminal 16 and a negative terminal 17. The lid 15 is provided with a vent for every cell chamber, and a vent plug 18 is inserted into the vent. At the time of water addition, the vent plug 18 is taken off and the electrolyte solution to be added is replenished through the vent.

The element 11 is configured by stacking a plurality of positive electrode plates 2 and negative electrode plates 3 which are each wrapped with a bag-like separator 4. In the cell chamber 14 located at one end portion of the container 12, a positive electrode shelf portion 6 which connects lug portions 2a of the plurality of positive electrode plates 2 in parallel is connected to a through connector 8 and a negative electrode shelf portion 5 which connects lug portions 3a of the plurality of negative electrode plates 3 in parallel is connected to a negative pole 7. The negative pole 7 is connected to the negative terminal 17 on the outside of the lid 15. In the cell chamber 14 located at the other end portion of the container 12, a positive pole 9 is connected to the positive electrode shelf portion 6 and the through connector 8 is connected to the negative electrode shelf portion 5. The positive pole 9 is connected to the positive terminal 16 on the outside of the lid 15. Each through connector 8 passes through a through hole provided to the partition 13 and connects the elements 11 in the adjacent cell chambers 14 to each other in series.

The lead-acid battery according to the present invention is collectively described below.
(1) A lead-acid battery including:
   a negative electrode plate, a positive electrode plate, a bag-like separator, and an electrolyte solution, in which
   the negative electrode plate contains a negative electrode material containing a first carbon material and a second carbon material,
   the first carbon material has a particle size of 32 µm or more,
   the second carbon material has a particle size of less than 32 µm,
   a ratio: R2/R1 of a powder resistance R2 of the second carbon material to a powder resistance R1 of the first carbon material is 15 or more and 420 or less, wherein the powder resistances R1 and R2 are measured by the four probe method in conformity with JIS K 7194:1994 at a pressure of 3.18 MPa, and
   the positive electrode plate is wrapped with the bag-like separator, wherein a content of the first carbon material in the negative electrode material in a fully charged state is 0.05% by mass or more and 3.0% by mass or less, and

   wherein a content of the second carbon material in the negative electrode material in a fully charged state is 0.03% by mass or more and 1.0% by mass or less,
   wherein the first carbon material contains at least graphite and the second carbon material contains at least carbon black.
(2) In (1) above, a ratio: s2/s1 of a specific surface area s2 of the second carbon material to a specific surface area s 1 of the first carbon material is, for example, 10 or more and 500 or less.
(3) In (1) or (2) above, the R2/R1 ratio may be, for example, 20 or more, 25 or more, or 50 or more. In addition, the R2/R1 ratio may be 155 or less, 130 or less, or 70 or less.
(4) In (1) to (3) above, the range of R2/R1 ratio may be, for example, 25 to 420, 25 to 155, 25 to 70, 50 to 420, 50 to 155, 50 to 130, or 50 to 70.
(5) In (1) to (4) above, the s2/s1 ratio may be, for example, 20 or more, 30 or more, or 40 or more. In addition, s2/s1 may be 240 or less or 120 or less.
(6) In (1) to (5) above, the range of s2/s1 ratio may be, for example, 20 to 500, 20 to 400, 20 to 240, 20 to 120, 30 to 500, 30 to 400, 30 to 240, 30 to 120, 10 to 240, 10 to 120, or 20 to 120.

The content of the first carbon material in the negative electrode material in a fully charged state is0.05% by mass or more and 3.0% by mass or less and preferably 0.1% by mass or more. In addition, the content is preferably 2.0% by mass or less and still more preferably 1.5% by mass or less. These upper limits and lower limits can be arbitrarily combined.

The content of the second carbon material in the negative electrode material in a fully charged state is 0.03% by mass or more and 1.0% by mass or less and preferably 0.05% by mass or more. In addition, the content is preferably 0.5% by mass or less and still more preferably 0.3% by mass or less. These upper limits and lower limits can be arbitrarily combined.

The first carbon material contains at least graphite and the second carbon material contains at least carbon black.

Hereinafter, the present invention will be specifically described based on Examples and Comparative Examples, but the present invention is not limited to the following Examples.

### <<Lead-acid battery A1>>

### (1) Fabrication of negative electrode plate

Lead powder, water, dilute sulfuric acid, a carbon material, and an organic expander are mixed together to obtain a negative electrode paste. The negative electrode paste is filled in the mesh portion of an expanded grid made of a Pb-Ca-Sn-based alloy as a negative electrode current collector, cured, and dried to obtain an unformed negative electrode plate. As the carbon material, carbon black (Ketjen Black (registered trademark), average particle size D₅₀: 40 nm) and graphite (average particle size D₅₀: 110 µm) are used. As the organic expander, lignin is blended in the negative electrode paste by adjusting the amount thereof added so that the content thereof in 100% by mass of the negative electrode material is 0.05% by mass.

### (2) Fabrication of positive electrode plate

Lead powder, water, and sulfuric acid are mixed to fabricate a positive electrode paste. The positive electrode paste is filled in the mesh portion of an expanded grid made of a Pb-Ca-Sn-based alloy, cured, and dried to obtain an unformed positive electrode plate.

### (3) Fabrication of lead-acid battery

The unformed positive electrode plate is accommodated in a bag-like separator formed of a polyethylene microporous film, and an element is formed by five unformed negative electrode plates and four unformed positive electrode plates per cell.

The element is inserted into a polypropylene container, the electrolyte solution is injected into the container, formation is performed in the container, and a liquid type automotive battery A1 with a nominal capacity of 30 Ah and a nominal voltage of 12 V is assembled. The terminal voltage of the lead-acid battery is set to 2 V/cell.

In the present lead-acid battery, the content of the first carbon material contained in the negative electrode material is set to 0.3% by mass and the content of the second carbon material is set to 1.5% by mass. In addition, the R2/R1 ratio is set to 23.6. The ratio (= S2/S1) of the specific surface area S2 of the second carbon material to the specific surface area S 1 of the first carbon material is set to 130.

However, these values are values determined as the content of each carbon material contained in the negative electrode material (100% by mass) when the negative electrode plate of the fabricated lead-acid battery is taken out and the carbon material contained in the negative electrode material is separated into the first carbon material and the second carbon material by the procedure described above. The powder resistances R1 and R2 and R2/R1 ratio of the respective carbon materials are also determined by the procedure described above.

### <<Lead-acid batteries A2 to A6>>

The R2/R1 ratio and S2/S1 ratio are changed as presented in Table 1 by adjusting the average particle size D₅₀ and specific surface area of each carbon material used, the average aspect ratio of the first carbon material, and the like. Negative electrode plates are fabricated similarly to those of the lead-acid battery A1 except this, and lead-acid batteries A2 to A8 are assembled similarly to the lead-acid battery A1 except that the negative electrode plates obtained are used.

### <<Lead-acid battery AR>>

As the carbon material, only carbon black (Ketjen Black (registered trademark), average particle size D₅₀: 40 nm) is used. A negative electrode plate is fabricated similarly to that of the lead-acid battery A1 except this, and a lead-acid battery AR is assembled similarly to the lead-acid battery A1 except that the negative electrode plate obtained is used.

### <<Lead-acid batteries B 1 to B8>>

The unformed negative electrode plate is accommodated in a bag-like separator instead of the unformed positive electrode plate, and an element is formed by five unformed negative electrode plates and four unformed positive electrode plates per cell. Lead-acid batteries B1 to B8 are assembled similarly to the lead-acid batteries A1 to A8 except this.

### <<Lead-acid battery BR>>

The unformed negative electrode plate is accommodated in a bag-like separator instead of the unformed positive electrode plate, and an element is formed by five unformed negative electrode plates and four unformed positive electrode plates per cell. A lead-acid battery BR is assembled similarly to the lead-acid battery AR except this.

### [Evaluation 1: Deep discharge cycle test]

A deep discharge cycle test of lead-acid battery is performed at 40°C and a depth of discharge of 50% under the following charge-discharge conditions. The number of cycles when the voltage at the end stage of discharge at the time of a 50% depth discharge is lower than 1.67 V/cell is used as an index of the deep discharge cycle life. The ratio when the result for the lead-acid battery BR is regarded as 100% is presented in each table.

### <Charge-discharge conditions>

Discharge: discharged at a constant current of 0.25 CAfor 2 hours.

Charge: charged at a constant voltage of 2.6 V/cell and a maximum current of 0.25 CAfor 5 hours.

### [Evaluation 2: High rate PSOC cycle test]

A high rate PSOC cycle test of lead-acid battery is performed at 40°C in the pattern presented in Table 1. The number of cycles until the terminal voltage reaches 1.2 V/cell is used as an index of the high rate PSOC cycle life. The ratio when the result for the lead-acid battery BR is regarded as 100% is presented in each table. In Table 1, "CC discharge" means "constant current discharge" and "CV charge" means "constant voltage charge".

**[Table 1]**

| Step | Details | Test conditions | | Remarks |
|---|---|---|---|---|
| | | Current, voltage, or number of repetition | Finish conditions | |
| 1 | CC discharge | 1CA | 59 seconds | - |
| 2 | CC discharge | 300 A | 1 second | - |
| 3 | CV charge | 2.4 V/cell, 50 A maximum | 10 seconds | - |
| 4 | CC discharge | 1CA | 5 seconds | - |
| 5 | Repetition of steps 3 and 4 | 5 times | - | 135 seconds to this step (1 cycle) |
| 6 | Repetition of steps 1 to 5 | 50 times | - | - |
| 7 | CV charge | 2.4 V/cell, 50 A maximum | 900 seconds | About 2 hours to this step (50 cycles) |
| 8 | Repetition of steps 1 to 7 | 72 times | - | - |
| 9 | Pause | 15 hours | - | 1 week to this step (3600 cycles) |
| 10 | Returned to step 1 | - | - | - |

### [Evaluation 3: Moss short circuit acceleration test]

A charge-discharge test is performed in a water tank at 40°C under the following charge-discharge conditions. In Tables 2 and 3, o is displayed in a case where a moss short circuit occurs and × is displayed in a case where a moss short circuit does not occur.

### <Charge-discharge conditions>

Discharge: discharged at a constant current of 0.25 CAfor 2 hours.

Charge: charged at a constant voltage of 2.6 V/cell and a maximum current of 0.25 CAfor 5 hours.

The charge-discharge is repeated 270 cycles, and it is judged that a moss short circuit has occurred in a case where the current at the end stage of charge (5th hour) reaches 0.25 CA before charge-discharge is repeated 270 cycles.

**[Table 2]**

| Battery | Wrapped electrode | R2/R1 ratio | s2/s1 ratio | Deep discharge cycle life (%) | High rate PSOC cycle life (%) | Occurrence of moss short circuit after 270 cycles |
|---|---|---|---|---|---|---|
| AR | Positive electrode | Only carbon black | | 539 | 95.0 | ○ |
| A1 | | 0.64 | 9.13 | 538 | 28.8 | ○ |
| A2 | | 0.74 | 9.13 | 539 | 32.8 | ○ |
| A3 | | 23.6 | 130 | 538 | 106.4 | × |
| A4 | | 27.4 | 237 | 539 | 137.4 | × |
| A5 | | 28.2 | 40.0 | 538 | 100.9 | × |
| A6 | | 40.0 | 20.0 | 539 | 129.5 | × |
| A7 | | 57.2 | 609 | 534 | 162.2 | ○ |
| A8 | | 420 | 936 | 538 | 131.6 | ○ |

**[Table 3]**

| Battery | Wrapped electrode | R2/R1 ratio | s2/s1 ratio | Deep discharge cycle life (%) | High rate PSOC cycle life (%) | Occurrence of moss short circuit after 270 cycles |
|---|---|---|---|---|---|---|
| BR | Negative electrode | Only carbon black | | 100 | 100 | × |
| B1 | | 0.64 | 9.13 | 100 | 58.5 | × |
| B2 | | 0.74 | 9.13 | 100 | 58.5 | × |
| B3 | | 23.6 | 130 | 101 | 107.3 | × |
| B4 | | 27.4 | 237 | 100 | 138.1 | × |
| B5 | | 28.2 | 40.0 | 100 | 105.6 | × |
| B6 | | 40.0 | 20.0 | 101 | 130.0 | × |
| B7 | | 57.2 | 609 | 100 | 162.5 | × |
| B8 | | 420 | 936 | 99 | 131.6 | × |

As presented in Tables 2 and 3, it can be understood that a lead-acid battery exhibiting excellent life performance in both the deep discharge cycle test and the high rate PSOC cycle test can be obtained by controlling the R2/R1 ratio to be in the range of 15 to 420. Among these, the high rate PSOC cycle life is remarkably improved when the R2/R1 ratio is set to 25 or more, and the high rate PSOC cycle life is further remarkably improved when the R2/R1 ratio is set to 50 or more. In addition, the occurrence of moss short circuit is remarkably suppressed by controlling the s2/s1 ratio to be in the range of 10 to 500.

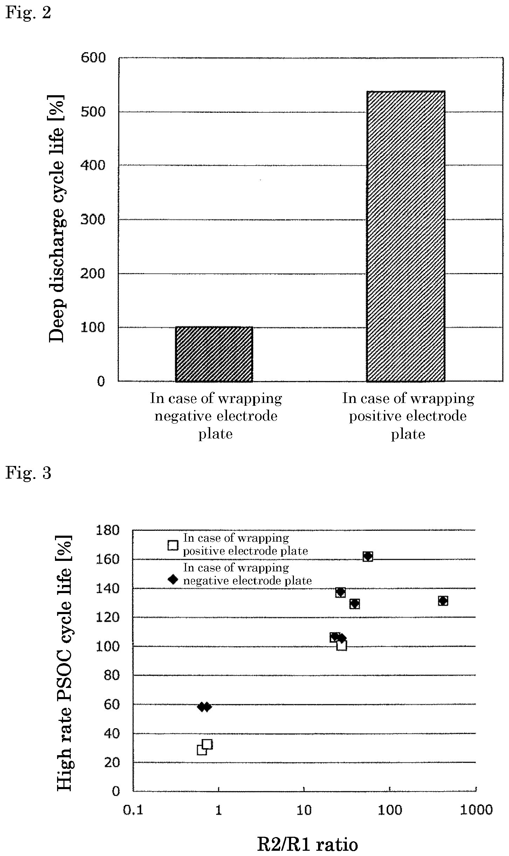

The results of the deep discharge cycle test for the lead-acid battery A3 and the lead-acid battery B3 are illustrated in Fig. 2 using a bar graph for comparison. From this comparison, it can be understood that the deep discharge cycle life is remarkably improved by packaging the positive electrode plate with a bag-like separator as compared with a case where the negative electrode plate is wrapped with a bag-like separator.

The relation between the R2/R1 ratio in the lead-acid batteries A1 to A8 and the lead-acid batteries B1 to B8 and the high rate PSOC cycle life of these lead-acid batteries is illustrated in Fig. 3. As illustrated in Fig. 3, the high rate PSOC cycle life is shorter in a case where the positive electrode plate is wrapped with a bag-like separator than in a case where the negative electrode plate is wrapped with a bag-like separator when the R2/R1 ratio is less than 15. In other words, in a case where the positive electrode plate is wrapped with a bag-like separator, it is important to control the R2/R1 ratio in order to attain favorable high rate PSOC cycle life.

### INDUSTRIAL APPLICABILITY

The lead-acid battery according to an aspect of the present invention is applicable to valve regulated lead-acid batteries and liquid type lead-acid batteries and can be suitably utilized as a power source for starting motor vehicles, motorcycles or the like and a power source for industrial energy storage apparatuses for electrically driven vehicles (forklifts and the like) and the like.

### DESCRIPTION OF REFERENCE SIGNS

1: lead-acid battery
2: positive electrode plate
2a: lug portion of positive electrode plate
3: negative electrode plate
3a: lug portion of negative electrode plate
4: bag-like separator
5: negative electrode shelf portion
6: positive electrode shelf portion
7: negative pole
8: through connector
9: positive pole
11: element
12: container
13: partition
14: cell chamber
15: lid
16: positive terminal
17: negative terminal
18: vent plug

## Claims

1. A lead-acid battery comprising:
a negative electrode plate, a positive electrode plate, a bag-like separator, and an electrolyte solution,
wherein the negative electrode plate contains a negative electrode material containing a first carbon material and a second carbon material,
the first carbon material has a particle size of 32 µm or more,
the second carbon material has a particle size of less than 32 µm,
wherein the particle size is determined according to the method in the description,
a ratio: R2/R1 of a powder resistance R2 of the second carbon material to a powder resistance R1 of the first carbon material is 15 or more and 420 or less, wherein the powder resistances R1 and R2 are measured by the four probe method in conformity with JIS K 7194:1994 at a pressure of 3.18 MPa, and
the positive electrode plate is wrapped with the bag-like separator, wherein a content of the first carbon material in the negative electrode material in a fully charged state is 0.05% by mass or more and 3.0% by mass or less, and
wherein a content of the second carbon material in the negative electrode material in a fully charged state is 0.03% by mass or more and 1.0% by mass or less,
wherein the first carbon material contains at least graphite and the second carbon material contains at least carbon black.

2. The lead-acid battery according to claim 1, wherein a ratio: s2/s1 of a BET specific surface area s2 of the second carbon material to a BET specific surface area s1 of the first carbon material is 10 or more and 500 or less.

3. The lead-acid battery according to claim 1 or 2, wherein a ratio: R2/R1 of a powder resistance R2 of the second carbon material to a powder resistance R1 of the first carbon material is 25 or more.

4. The lead-acid battery according to any one of claims 1 to 3,
wherein a ratio: R2/R1 of a powder resistance R2 of the second carbon material to a powder resistance R1 of the first carbon material is 155 or less.

5. The lead-acid battery according to any one of claims 1 to 4,
wherein a ratio: S2/S1 of a BET specific surface area S2 of the second carbon material to a BET specific surface area S 1 of the first carbon material is 20 or more.

6. The lead-acid battery according to any one of claims 1 to 5,
wherein a ratio: S2/S1 of a BET specific surface area S2 of the second carbon material to a BET specific surface area S 1 of the first carbon material is 240 or less.

## Patentansprüche

1. Bleiakkumulator, umfassend:
eine Negativelektrodenplatte, eine Positivelektrodenplatte, einen taschenartigen Separator und eine Elektrolytlösung,
wobei die Negativelektrodenplatte ein ein erstes Kohlenstoffmaterial und ein zweites Kohlenstoffmaterial enthaltendes Negativelektrodenmaterial enthält,
das erste Kohlenstoffmaterial eine Teilchengröße von 32 µm oder mehr aufweist,
das zweite Kohlenstoffmaterial eine Teilchengröße von weniger als 32 µm aufweist,
wobei die Teilchengröße gemäß dem Verfahren in der Beschreibung bestimmt wird,
ein Verhältnis R2/R1 eines Pulverwiderstands R2 des zweiten Kohlenstoffmaterials zu einem Pulverwiderstand R1 des ersten Kohlenstoffmaterials 15 oder mehr und 420 oder
weniger beträgt, wobei die Pulverwiderstände R1 und R2 mit dem Vier-Sonden-Verfahren in Übereinstimmung mit JIS K 7194:1994 bei einem Druck von 3,18 MPa gemessen werden, und
die Positivelektrodenplatte mit dem taschenartigen Separator umhüllt ist,
wobei ein Anteil des ersten Kohlenstoffmaterials in dem Negativelektrodenmaterial in einem vollständig geladenen Zustand 0,05 Masse-% oder mehr und 3,0 Masse-% oder weniger beträgt, und
wobei ein Anteil des zweiten Kohlenstoffmaterials in dem Negativelektrodenmaterial in einem vollständig geladenen Zustand 0,03 Masse-% oder mehr und 1,0 Masse-% oder weniger beträgt,
wobei das erste Kohlenstoffmaterial mindestens Graphit enthält und das zweite Kohlenstoffmaterial mindestens Ruß enthält.

2. Bleiakkumulator nach Anspruch 1, wobei ein Verhältnis S2/S1 einer spezifischen BET-Oberfläche S2 des zweiten Kohlenstoffmaterials zu einer spezifischen BET-Oberfläche S1 des ersten Kohlenstoffmaterials 10 oder mehr und 500 oder weniger beträgt.

3. Bleiakkumulator nach Anspruch 1 oder 2, wobei ein Verhältnis R2/R1 eines Pulverwiderstands R2 des zweiten Kohlenstoffmaterials zu einem Pulverwiderstand R1 des ersten Kohlenstoffmaterials 25 oder mehr beträgt.

4. Bleiakkumulator nach einem der Ansprüche 1 bis 3, wobei ein Verhältnis R2/R1 eines Pulverwiderstands R2 des zweiten Kohlenstoffmaterials zu einem Pulverwiderstand R1 des ersten Kohlenstoffmaterials 155 oder weniger beträgt.

5. Bleiakkumulator nach einem der Ansprüche 1 bis 4, wobei ein Verhältnis S2/S1 einer spezifischen BET-Oberfläche S2 des zweiten Kohlenstoffmaterials zu einer spezifischen BET-Oberfläche S1 des ersten Kohlenstoffmaterials 20 oder mehr beträgt.

6. Bleiakkumulator nach einem der Ansprüche 1 bis 5, wobei ein Verhältnis S2/S1 einer spezifischen BET-Oberfläche S2 des zweiten Kohlenstoffmaterials zu einer spezifischen BET-Oberfläche S1 des ersten Kohlenstoffmaterials 240 oder weniger beträgt.

## Revendications

1. Batterie au plomb comprenant :
une plaque d'électrode négative, une plaque d'électrode positive, un séparateur de type sac et une solution d'électrolyte,
dans laquelle la plaque d'électrode négative contient un matériau d'électrode négative contenant un premier matériau de carbone et un second matériau de carbone,
le premier matériau de carbone a une taille de particule de 32 µm ou plus,
le second matériau de carbone a une taille de particule de moins de 32 um,
dans laquelle la taille de la particule est déterminée selon la procédé dans la description,
un rapport : R2/R1 d'une résistance à une poudre R2 du second matériau de carbone à une résistance à une poudre R1 du premier matériau de carbone est de 15 ou plus et de 420 ou moins, les résistances à une poudre R1 et R2 étant mesurées par le procédé des quatre sondes en conformité avec la norme JIS K 7194 : 1994 à une pression de 3,18 MPa et
l'électrode de plaque positive est enrobée avec le séparateur de type sac,
dans laquelle une teneur du premier matériau de carbone dans le matériau d'électrode négative dans un état complètement chargé étant de 0,05 % en masse ou plus et de 3,0 % en masse ou moins et
dans laquelle une teneur du second matériau de carbone dans le matériau d'électrode négative dans un état complètement chargé étant de 0,03 % en masse ou plus et de 1,0 % en masse ou moins,
dans laquelle le premier matériau de carbone contient au moins du graphite et le second matériau de carbone contient au moins du noir de charbon.

2. Batterie au plomb selon la revendication 1, dans laquelle un rapport : S2/S1 d'une surface spécifique de BET S2 du second matériau de carbone à une surface spécifique de BET S1 du premier matériau de carbone est de 10 ou plus et de 500 ou moins.

3. Batterie au plomb selon la revendication 1 ou 2, dans laquelle un rapport R2/R1 d'une résistance à une poudre R2 du second matériau de carbone à une résistance à une poudre R1 du premier matériau de carbone est de 25 ou plus.

4. Batterie au plomb selon l'une quelconque des revendications 1 à 3, dans laquelle un rapport : R2/R1 d'une résistance à une poudre R2 du second matériau de carbone à une résistance à une poudre R1 du premier matériau de carbone est de 155 ou moins.

5. Batterie au plomb selon l'une quelconque des revendications 1 à 4, dans laquelle un rapport : S2/S1 d'une surface spécifique de BET S2 du second matériau de carbone à une surface spécifique de BET S1 du premier matériau de carbone est de 20 ou plus.

6. Batterie au plomb selon l'une quelconque des revendications 1 à 5, dans laquelle un rapport : S2/S1 d'une surface spécifique de BET S2 du second matériau de carbone à une surfaces spécifique de BET S1 du premier matériau de carbone est de 240 ou moins.
